# FASCICULE DE BREVET EUROPEEN

(11) **EP 0 731 308 B1**
(45) Date de publication et mention de la délivrance du brevet: **14.04.1999**
(21) Numéro de dépôt: 96400411.3
(22) Date de dépôt: 27.02.1996
(51) Int. Cl.: F16L 11/12

(54) **Tubes à base de polyamide pour transport d'essence**
Auf Polyamid basierende Schläuche zum Kraftstofftransport
Polyamid based tubes for the transport of fuel

(30) Priorité: 09.03.1995 FR 9502751
(43) Date de publication de la demande: 11.09.1996
(73) Titulaire: ELF ATOCHEM S.A., 92800 Puteaux, Hauts de Seine (FR)
(72) Inventeur: Siour, Daniel, 78500 Sartrouville (FR); Denizart, Olivier, 69390 Millery (FR); Echalier, Bruno, 75006 Paris (FR)
(74) Mandataire: Neel, Henry

(56) Documents cités:
- WO-A-94/29626
- DE-A- 4 132 123
- DE-C- 4 202 399
- DE-U- 9 319 879
- FR-A- 2 579 290
- GB-A- 2 204 376
- GB-A- 2 204 932

## Description

La présente invention concerne des tubes à base de polyamide pour transport d'essence et plus particulièrement des tubes pour amener l'essence du réservoir des automobiles jusqu'au moteur et des tubes pour le transport d'hydrocarbures dans les stations-service.

Pour des raisons de sécurité et de préservation de l'environnement, les constructeurs automobiles imposent aux tubes d'essence des caractéristiques mécaniques : résistance et flexibilité, et des caractéristiques de résistance accrue à la perméabilité. Les tubes doivent être le moins perméable possible aux produits pétroliers et à leurs additifs, en particulier le méthanol ou l'éthanol.

Les polyamides présentent toutes ces propriétés, cependant, pour présenter de bonnes propriétés mécaniques à basse température, les polyamides doivent être plastifiés. Or, les polyamides plastifiés sont moins étanches aux hydrocarbures que les polyamides non plastifiés, surtout les essences sans plomb.

La demanderesse a maintenant trouvé un tube à base de polyamide, très peu perméable à l'essence et ayant de très bonnes propriétés mécaniques.

La présente invention concerne un tube comprenant une couche intérieure comprenant un mélange de polyamide et de polyoléfine à matrice polyamide et une couche extérieure comprenant un polyamide.

S'agissant de la matrice polyamide de la couche intérieure, on peut utiliser tout polyamide.

On entend par polyamide les produits de condensation :
- d'un ou plusieurs aminoacides, tels les acides aminocaproïques, amino-7-heptanoïque, amino-11-undécanoique et amino-12-dodécanoïque d'un ou plusieurs lactames tels que caprolactame, oenantholactame et lauryllactame ;
- d'un ou plusieurs sels ou mélanges de diamines telles l'hexaméthylène-diamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de tous ces monomères ce qui conduit à des copolyamides.

On peut utiliser des mélanges de polyamide. On utilise avantageusement le PA-6 et le PA-6,6 et le PA 12.

On entend par polyoléfines des polymères comprenant des motifs oléfines tels que par exemple des motifs éthylène, propylène, butène-1, etc...

A titre d'exemple, on peut citer :
- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

Ces copolymères de l'éthylène pouvant être greffés par des anhydrides d'acides dicarboxyliques insaturés ou des époxydes insaturés.
- les copolymères blocs styrène / éthylène-butène / styrène (SEBS) éventuellement maléisés.

On peut utiliser des mélanges de deux ou plusieurs de ces polyoléfines.

On utilise avantageusement:
- le polyéthylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé,
- le polypropylène.

Il est recommandé, pour faciliter la formation de la matrice de polyamide, et si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.

On peut citer par exemple :
- le polyéthylène, le polypropylène, les copolymères éthylène propylène, les copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé.
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.

La quantité de polyamide formant la matrice dans la couche intérieure peut être comprise entre 50 et 95 parties pour 5 à 50 parties de polyoléfines.

La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères de la couche intérieure par mélange de polyamide, de polyoléfine et éventuellement de compatibilisant selon les techniques usuelles de mélange à l'état fondu (bi vis, Buss, monovis).

Avantageusement, la couche intérieure comprend une matrice de polyamide 6 (PA-6) ou 66 (PA-6,6) dans laquelle sont dispersés, soit des nodules d'un mélange de polyéthylène basse densité et de copolymère d'éthylène de (méth)acrylate d'alkyl et d'anhydride maléique ou de méthacrylate de glycidyle, soit des nodules de polypropylène.

De tels produits sont décrits dans les brevets US 5 070 145 et EP 564 338.

Dans le cas du polypropylène, on ajoute un comptabilisant qui est avantageusement un copolymère éthylène / propylène majoritaire en nombre de motifs propylène, greffé par l'anhydride maléique, puis condensé ensuite avec des oligomères mono aminés de caprolactame.

Ces mélanges de polyamide et de polyoléfine de la couche intérieure peuvent être plastifiés et éventuellement contenir des charges telles que du noir de carbone, etc.

De tels mélanges de polyamide et de polyoléfine sont décrits dans le brevet US 5 342 886.

Selon une forme préférée de l'invention, la quantité de polyamide de la couche intérieure est comprise entre 50 et 75 parties pour 100 parties du mélange polyamide/polyoléfine.

A titre d'exemple, on peut utiliser les mélanges suivants (en % poids) :
1)
   - 55 à 70 % de PA-6.
   - 5 à 15 % d'un copolymère éthylène propylène majoritaire en polypropylène greffé par de l'anhydride maléique puis condensé ensuite avec des oligomères monoaminés de caprolactame.
   - le complément à 100 % en polypropylène.
2)
   - 55 à 70 % de PA-6.
   - 5 à 15 % d'au moins un copolymère de l'éthylène avec (i) un (méth)acrylate d'alkyle ou un ester vinylique d'acide carboxylique insaturé et (ii) un anhydride d'acide carboxylique insaturé ou un époxyde insaturé greffé ou copolymérisé.
   - le complément en polyéthylène.

Le polyamide de la couche extérieure peut être choisi parmi les polyamides cités précédemment pour la couche intérieure. Avantageusement, on utilise le polyamide 11 ou le polyamide 12. Avantageusement, le polyamide de la couche extérieure est plastifié.

On peut utiliser les plastifiants usuels tels que le butyl benzène sulfonamide (BBSA) et les polymères comprenant des blocs polyamides et des blocs polyéther. Ces polymères à blocs résultent de la condensation de blocs polyamides à extrémités carboxyliques avec, soit des polyétherdiols, soit des polyétherdiamines, soit un mélange de ces polyéthers. Cette couche extérieure peut contenir aussi des additifs anti oxydants et des charges usuelles telles que du noir de carbone.

Il est souhaitable que la couche intérieure soit liée de façon efficace à la couche extérieure. Un tube qui ne présente pas de liaison entre les deux couches, ne peut être plié ou coudé facilement par formage à chaud ; dans ce cas, le matériau le plus mince forme des plis au cours de l'opération.

Par ailleurs, si les deux couches n'adhérent pas suffisamment entre elles, la condensation éventuelle des gaz entre les deux couches peut dans le temps entraîner la déformation de la partie du tube la plus mince. En outre, les tubes étant reliés entre eux, ainsi qu'au réservoir d'essence et au carburateur par des raccords, ceux-ci ne peuvent assurer l'étanchéité s'ils s'appuient sur deux couches dissociées. Enfin, dans le cas où l'épaisseur de la couche intérieure est très mince, et sans adhésion, une dépression dans le tube déforme de façon irréversible la couche intérieure rendant le tube inutilisable.

Les tubes de l'invention peuvent être produits par coextrusion. Si la couche intérieure n'adhère pas suffisamment à la couche extérieure, on peut disposer entre elles un liant de coextrusion.

A titre d'exemple de liant, on peut citer :
- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique. On peut aussi utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les epoxydes insaturés ; ces copolymères pouvant être greffés par des anhydrides d'acides dicarboxyliques insaturés tels que l'anhydride maléique ou des epoxydes insaturés tels que le méthacrylate de glycidyle.

On peut aussi ajouter à l'une ou à chacune des couches un produit qui améliore leur adhésion sans devoir utiliser une couche de liant. Ce produit peut être le liant décrit ci-dessus.

On ne sortirait pas du cadre de l'invention en disposant d'autres couches entre la couche intérieure et la couche extérieure, c'est-à-dire qu'au lieu d'avoir couche intérieure / couche extérieure, on pourrait avoir couche intérieure / autre couche / couche extérieure. Il peut aussi être nécessaire de disposer une couche de liant entre la couche extérieure et la couche supplémentaire si la liaison entre ces deux dernières couches est insuffisante, ainsi qu'il a été expliqué précédemment pour la couche de liant . De même, entre la couche intérieure et la couche supplémentaire, cette autre couche peut être constituée d'un mélange de polymères provenant de tubes de l'invention présentant des défauts et qui doivent être recyclés.

Selon une autre forme de l'invention, on peut disposer entre les couches intérieure et extérieure une couche d'un polymère comprenant des motifs éthylène et des motifs alcool vinylique (EVOH).

Comme expliqué ci-dessus, on peut aussi utiliser un liant.

On utilise avantageusement la structure :
couche intérieur / EVOH / liant / couche extérieure.

S'agissant des tubes pour amener l'essence du réservoir des automobiles au moteur, leur diamètre extérieur est en général compris entre 6 et 12 mm et leur épaisseur 0,8 à 2 mm. La couche intérieure est d'au moins 50 µm et de préférence 100 à 500 µm.

La couche éventuelle de liant est d'au moins 10 µm et de préférence de 20 à 100 µm.

La couche extérieure est d'au moins 300 µm et de préférence de 400 à 800 µm. La couche éventuelle d'EVOH peut être comprise entre 10 et 40 µm.

Ces tubes peuvent être gainés de caoutchouc pour les protéger des points chauds du moteur.

Quant aux tubes utilisés dans les stations-service, le diamètre extérieur est en général de 20 à 120 mm et leur épaisseur de 0,8 à 14 mm. Les épaisseurs de liant et de couche intérieure restent identiques à celles citées ci-dessus. Les tubes peuvent être renforcés par toutes les méthodes usuelles.

### Exemples

On a fabriqué par coextrusion un tube de diamètre extérieur 8 mm et d'épaisseur 1 mm.

La couche extérieure de 520 µm est constituée de PA-11 (de viscosité 1,4 dl/g mesurée à 25° C sur une solution de 0,5 g dans 100 g de méta-crésol) contenant 13 % en poids de BBSA et chargée de noir de carbone.

Le liant d'épaisseur 80 µm est un mélange de deux copolymères de l'éthylène, l'un avec du butène, l'autre avec du propylène greffés par l'anhydride maléique, de melt index 1 contenant 0,4 % en poids d'anhydride.

La couche intérieure d'épaisseur 400 µm est un mélange de :
- 65 parties de PA-6 formant matrice ;
- 30 parties d'un copolymère éthylène / butène et de melt index 0,8 g/10 mn
- 5 parties d'un copolymère éthylène / acrylate d'éthyle / anhydride maléique contenant 5 % en poids d'acrylate et 3 % en poids d'anhydride et de melt index 5.

### Propriétés mécaniques

### a) Choc à froid

Choc à - 40° C selon les normes DIN 73378, SAE J 844 et GM 213 M.

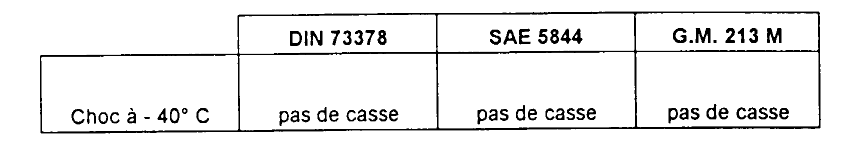

Dans les mêmes conditions de test, un tube monocouche de dimensions identiques réalisé entièrement avec le mélange de la couche intérieure présente 10 casses sur 10.

### b) Elongation dans le carburant

Un tube réalisé entièrement avec le mélange de la couche intérieure s'allonge de 5,2 % lors d'un test de circulation de carburant.

Lors de ce même test, le tube tricouche, selon l'invention, ne s'allonge que de 2 %.

### Perméabilité

Des mesures de perméabilité avec un carburant contenant 10 % d'éthanol (référence TF 1) à une température de 40° C ont donné les résultats suivants sur des tubes 8 x 1 mm.
- Tube monocouche réalisé entièrement avec le polymère de la couche extérieure de l'invention.
   *Perméabilité: 135g/M*^{*2*}*/jour*
- Tube tricouche selon l'invention
   *Perméabilité : 43 g/M*^{*2*}*/jour*
- Tube monocouche réalisé en polyamide identique à celui de la couche extérieure (PA-11) mais sans le plastifiant.
   *Perméabilité : 33 g/M*^{*2*}*/jour*

On obtient donc une perméabilité équivalente à un monocouche non plastifié (PA-11) tout en gardant une bonne flexibilité grâce à la couche externe de Polyamide plastifié et l'effet barrière de l'alliage PA/Polyoléfine.

## Revendications

1. Tube comprenant une couche intérieure comprenant un mélange de polyamide et de polyoléfine à matrice polyamide et une couche extérieure comprenant un polyamide.

2. Tube selon la revendication 1 dans lequel la matrice de la couche intérieure est en Polyamide 6, Polyamide 6,6 ou Polyamide 12.

3. Tube selon la revendication 1 ou 2 dans lequel la polyoléfine de la couche intérieure est soit du polypropylène, soit un mélange d'un copolymère éthylène / alpha oléfine et d'un copolymère éthylène / (méth)acrylate d'alkyle / anhydride maléique ou méthacrylate de glycidyle.

4. Tube selon l'une des revendications 1 à 3 dans lequel le polyamide de la couche extérieure est du PA-11 ou du PA-12.

5. Tube selon l'une des revendications 1 à 4 dans lequel une couche de liant est disposée entre la couche intérieure et la couche extérieure.

6. Tube selon la revendication 5 ayant un diamètre extérieur entre 6 et 12 mm, une épaisseur entre 0,8 et 2 mm, une couche intérieure d'au moins 50 µm, une couche de liant d'au moins 10 µm et une couche extérieure d'au moins 300 µm.

7. Tube selon l'une des revendications 1 à 6 dans lequel une couche d'EVOH est disposée entre la couche intérieure et la couche extérieure.

## Patentansprüche

1. Schlauch, der eine innere Schicht, die eine Mischung aus Polyamid und Polyolefin in einer Polyamidmatrix, und eine äußere Schicht umfaßt, die ein Polyamid enthält.

2. Schlauch nach Anspruch 1, bei dein die Matrix der inneren Schicht ein Polyamid-6, ein Polyamid-6,6 oder ein Polyamid-12 ist.

3. Schlauch nach Anspruch 1 oder 2, bei dem das Polyolefin der inneren Schicht entweder Polypropylen oder eine Mischung aus Ethylen/α-Olefin-Copolymer und Ethylen/Alkyl(meth-)acrylat/Maleinsäureanliydrid- oder Glycidylmethacrylat-Copolymer ist.

4. Schlauch nach einem der Ansprüche 1 bis 3, bei dem das Polyamid der äußeren Schicht PA-11 oder PA-12 ist.

5. Schlauch nach einem der Ansprüche 1 bis 4, bei dem eine Haftmittelschicht zwischen der inneren Schicht und der äußeren Schicht angeordnet ist.

6. Schlauch nach Anspruch 5 mit einem äußeren Durchmesser zwischen 6 und 12 mm, einer Dicke zwischen 0,8 und 2 mm, einer inneren Schicht von mindestens 50 µm, einer Haftschicht von mindestens 10 µm und einer äußeren Schicht von mindestens 300 µm.

7. Schlauch nach einem der Ansprüche 1 bis 6, bei dem eine EVOH-Schicht zwischen der inneren Schicht und der äußeren Schicht angeordnet ist.

## Claims

1. Pipe including an internal layer including a mixture of polyamide and polyolefin with a polyamide matrix and an external layer including a polyamide.

2. Pipe according to Claim 1, in which the matrix of the internal layer is made of polyamide 6, polyamide 6,6 or polyamide 12.

3. Pipe according to Claim 1 or 2, in which the polyolefin of the internal layer is either polypropylene or a mixture of an ethylene/alpha-olefin copolymer and of an ethylene/alkyl (meth)acrylate/maleic anhydride or glycidyl methacrylate copolymer.

4. Pipe according to one of Claims 1 to 3, in which the polyamide of the external layer is PA-11 or PA-12.

5. Pipe according to one of Claims 1 to 4, in which a layer of binder is placed between the internal layer and the external layer.

6. Pipe according to Claim 5, which has an external diameter of between 6 and 12 mm, a thickness of between 0.8 and 2 mm, an internal layer of at least 50 µm, a layer of binder of at least 10 µm and an external layer of at least 300 µm.

7. Pipe according to one of Claims 1 to 6, in which an EVOH layer is placed between the internal layer and the external layer.
